(19) Europäisches Patentamt
European Patent Office
Office européen des brevets

(11) Numéro de publication: **0 050 068**
**B1**

(12) # FASCICULE DE BREVET EUROPEEN

(45) Date de publication du fascicule du brevet: **28.03.84**

(51) Int. Cl.³: **B 01 J 23/88,** B 01 J 23/24, B 01 J 23/30, B 01 J 37/04

(21) Numéro de dépôt: **81401508.7**

(22) Date de dépôt: **30.09.81**

(54) **Procédé pour la préparation de catalyseurs à base d'oxydes de molybdène et/ou de tungstène et d'oxydes d'autres métaux.**

(30) Priorité: **10.10.80 FR 8021652**

(43) Date de publication de la demande: **21.04.82 Bulletin 82/16**

(45) Mention de la délivrance du brevet: **28.03.84 Bulletin 84/13**

(84) Etats contractants désignés: **BE CH DE FR GB IT LI NL SE**

(56) Documents cités:
**EP - A - 0 009 239**
**EP - A - 0 015 565**
**DE - A - 2 004 251**
**DE - A - 2 450 659**
**DE - A - 2 456 113**
**FR - A - 1 604 942**
**FR - A - 2 196 848**
**FR - A - 2 364 061**
**GB - A - 2 033 775**

(73) Titulaire: **RHONE-POULENC CHIMIE DE BASE, 25, quai Paul Doumer, F-92408 Courbevoie (FR)**

(72) Inventeur: **Derrien, Jean-Yves, 9, rue Cécile Vallet, F-92340 Bourg-la-Reine (FR)**

(74) Mandataire: **Dutruc-Rosset, Marie-Claude et al, RHONE POULENC RECHERCHES Service Brevets Chimie et Polymères 25, Quai Paul Doumer, F-92408 Courbevoie Cedex (FR)**

**EP 0 050 068 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

# Procédé pour la préparation de catalyseurs à base d'oxydes de molybdène et/ou de tungstène et d'oxydes d'autres métaux

La présente invention a pour objet un perfectionnement à la préparation de catalyseurs. Elle concerne plus particulièrement la préparation de catalyseurs à base d'oxydes de molybdène et/ou de tungstène.

De tels catalyseurs sont connus dans l'art antérieur. Ils sont utilisés, en particulier, pour la préparation d'aldéhydes α-β insaturés par oxydation d'oléfines en phase gazeuse.

C'est ainsi que le brevet français N° 1514167 décrit des catalyseurs pour la préparation d'aldéhydes insaturés par oxydation d'oléfines telles que le propylène et l'isopropylène par l'air ou l'oxygène de l'air répondant à la formule générale:

$$Ni_aCo_bFe_cBi_dAs_eP_fMo_gO_h$$

avec a compris entre 0 et 20, b entre 0 et 200 (a + b entre 0,5 et 20), c entre 0,5 et 8, d entre 0,1 et 7, e entre 0 et 3, f inférieur à 0,1, g égal à environ 12, h compris entre 36 et 98.

Ces catalyseurs sont préparés en ajoutant une solution aqueuse de sels solubles dans l'eau convenable de nickel, cobalt, fer et bismuth, d'un composé d'arsenic convenable et d'un composé du phosphore convenable à une solution aqueuse d'un molybdate convenable tel que le molybdate d'ammonium. La bouillie résultante est alors chauffée, avec un support si on le désire, pour éliminer l'eau et sécher le gâteau solide qui se forme. Le gâteau solide est ensuite calciné à une température élevée dans l'air. Des sels solubles dans l'eau convenable, mentionnés dans le brevet précité, sont le nitrate de nickel, le nitrate de cobalt, le nitrate ferrique et le nitrate de bismuth, par exemple.

Le brevet français N° 1604942 se rapporte à un procédé de préparation d'acroléine qui consiste à oxyder le propylène en phase gazeuse, avec un gaz contenant de l'oxygène et de la vapeur d'eau, en présence d'un catalyseur à base d'oxydes de molybdène, de bismuth, de fer et de cobalt dont la teneur en atome est la suivante: Mo 40,0 à 67,7%; Bi 1,9 à 21,7%; Fe 1,6 à 6,5% et Co 21,0 à 48,1%.

Le procédé de préparation de ces catalyseurs décrit dans ce brevet consiste à ajouter, dans une solution aqueuse de molybdate d'ammonium vigoureusement agitée, une solution aqueuse de nitrate de fer, cobalt et bismuth. Ensuite, on élimine l'eau et on calcine le produit résultant éventuellement sur un support.

Un autre document de l'art antérieur, la demande de brevet français N° 72.20810, publiée sous le N° 2147933, fait état d'un procédé de préparation de composés à groupes carbonyle insaturés à partir d'oléfines. Selon ce procédé, on conduit l'oxydation catalytique en présence d'un oxyde catalytique dans lequel les rapports atomiques des éléments catalytiques constitutifs Co/Fe/Bi/W/Mo/Si/Tl/Z (Z = métaux alcalins et alcalino-terreux) sont 2,0 à 20,0/0,1 à 10,0/0,1 à 10,0/0,5 à 10,0/2,0 à 11,5/0,5 à 15,0/0,005 à 3,0/0 à 3,0 sous réserve que W + Mo soit égal à 12,0.

On peut préparer ces catalyseurs en mélangeant des solutions aqueuses de molybdate d'ammonium et de p-tungstate d'ammonium, en ajoutant au mélange les solutions aqueuses de nitrate de cobalt, nitrate ferrique, nitrate de bismuth, nitrate de thallium, ainsi que la solution aqueuse d'un hydroxyde ou d'un nitrate d'un métal alcalin ou alcalino-terreux. On évapore ensuite l'eau et on calcine le produit obtenu éventuellement sur support.

On connaît encore, dans l'art antérieur, la demande de brevet d'invention N° 76.27531, publiée sous le N° 2364061 qui décrit un catalyseur à base d'oxyde de cobalt, de molybdène, de bismuth et de fer de formule $Co_aMo_{12}Fe_bBi_cOx$, avec a compris entre 8 et 10, b entre 0,5 et 2, c entre 0,5 et 2 et x satisfaisant aux valences, catalyseur dans lequel la phase active contient une phase répondant à la formule $Bi_2Mo_2Fe_2O_{12}$. Ces catalyseurs permettent d'obtenir des rendements très sensiblement améliorés lors, par exemple, de l'oxydation d'oléfines en aldéhydes α-β insaturés.

On prépare ces catalyseurs en faisant réagir une solution d'heptamolybdate d'ammonium et une solution de nitrates de Co, Bi et Fe. On évapore ensuite l'eau et on sèche la pâte. Le solide obtenu est soumis, après une éventuelle précalcination à environ 450°C, à une première calcination à une température comprise entre 450 et 500°C pendant au moins 5 h puis, après refroidissement à température ambiante, à une deuxième calcination dans les mêmes conditions que la première.

On constate donc que, dans l'art antérieur, il existe un grand nombre de documents décrivant la mise en œuvre pour l'oxydation par l'air d'oléfines — et, en particulier, pour l'oxydation de propylène en acroléine — de catalyseurs à base principalement d'oxydes de cobalt, fer, bismuth et molybdène. Un certain nombre d'oxydes d'autres métaux ont été proposés comme adjuvants à la composition de base. On constate également que les procédés de préparation de ces catalyseurs font tous intervenir, dans la première étape, la réaction entre l'heptamolybdate d'ammonium et les nitrates de fer, cobalt et bismuth.

Il se forme, lors de cette réaction, du nitrate d'ammonium qui se décomposera thermiquement à environ 220°C lors d'une calcination postérieure.

Il est clair que cette décomposition thermique du nitrate d'ammonium pose de sérieux problèmes pratiques. En effet, l'homme de l'art sait bien que le nitrate d'ammonium est un composé explosif et, à ce titre, est d'une manipulation dangereuse à l'échelle industrielle.

Dans certains procédés, on utilise également, à la place des nitrates, des chlorures des métaux entrant dans la composition du catalyseur souhaité. Il se forme alors du chlorure d'ammonium $NH_4Cl$ qui, lors de la décomposition thermique, va se sublimer aux environs de 340°C et se déposer sous forme de poudre blanche dans l'appareillage. L'encrassement résultant est bien évidemment néfaste lors des opérations de fabrication du catalyseur.

Il est à souligner que, dans la pratique industrielle, il est extrêmement difficile, sinon impossible, de s'affranchir de la présence simultanée de sels d'ammonium et de nitrates ou de sels d'ammonium et de chlorures.

On constate donc que subsiste dans l'art antérieur le besoin d'un procédé permettant la préparation de catalyseurs à base notamment d'oxydes de molybdène et/ou de tungstène, faisant intervenir la réaction d'au moins un sel d'ammonium et d'au moins un chlorure et/ou nitrate de ces métaux, procédé dans lequel il n'y ait pas de risque, lors des opérations ultérieures de calcination, de décomposition thermique du nitrate d'ammonium et/ou de sublimation du chlorure d'ammonium.

La titulaire a découvert un procédé atteignant cet objectif.

La présente invention a donc pour objet un procédé de préparation de catalyseurs comportant une phase active répondant à la formule générale:

$$A_aMo_cW_dB_bO_x$$

dans laquelle:

— A représente au moins un métal choisi parmi le groupe comprenant le cobalt, le nickel, le manganèse, le plomb,

— B représente au moins un métal choisi parmi le groupe comprenant le fer, le bismuth, le chrome, le thallium,

— a, représentant la somme des indices affectés à chacun des métaux A, est supérieur à 0 et inférieur ou égal à environ 12,

— c et d sont chacun supérieurs ou égaux à 0 et inférieurs ou égaux à 12, leur somme (c + d) étant égale à environ 12;

— b, représentant la somme des indices affectés à chacun des métaux B, est supérieur à 0 et inférieur ou égal à environ 1,5[(c + d)−a], et

— x satisfait aux valences,

procédé du type selon lequel: dans une première étape, on mélange en phase aqueuse des sels des métaux entrant dans la composition de la phase active, le molybdène et/ou le tungstène étant sous forme de sels d'ammonium et au moins l'un des métaux A et B étant sous la forme d'un nitrate ou d'un chlorure; dans une deuxième étape, on sèche la pâte obtenue et, dans une troisième étape on effectue au moins une calcination du solide obtenu éventuellement déposé sur un support, procédé caractérisé en ce que, dans la première étape, l'on ajoute, à une première solution aqueuse contenant les sels d'ammonium de molybdène et/ou de tungstène en quantités permettant d'atteindre les valeurs c et d, de l'ammoniaque jusqu'à obtention d'un pH compris entre 6 et 8; l'on ajoute simultanément à la solution résultante, d'une part, une deuxième solution aqueuse contenant les sels de A et de B en quantités permettant d'atteindre les valeurs a et b et, d'autre part, de l'ammoniaque de façon à maintenir le pH à une valeur comprise entre 6 et 8, puis en ce que l'on filtre la solution obtenue pour obtenir ladite pâte.

Le procédé selon l'invention est fondé sur le fait que, lorsque l'on mélange les première et deuxième solutions aqueuses dans les conditions de pH précisées ci-dessus, on assiste à la précipitation d'un solide ayant pour base l'ensemble des métaux mis en jeu, alors que le nitrate d'ammonium et/ou le chlorure d'ammonium résultant de la présence des ions ammonium, nitrate et chlorures dans les deux solutions restent en solution. On a ainsi, en fin d'addition, d'une part, une phase solide ne contenant pas de nitrate d'ammonium et/ou de chlorure d'ammonium qui, après séchage et calcination(s), donne le catalyseur recherché et, d'autre part, une phase aqueuse contenant principalement le nitrate d'ammonium et/ou le chlorure d'ammonium formés et, également, des traces des métaux entrant dans la composition du catalyseur recherché.

On peut citer plus particulièrement, comme sel d'ammonium pouvant être utilisé dans le cadre du procédé selon l'invention, l'heptamolybdate d'ammonium. Ce dernier peut être mis en œuvre soit sous forme d'heptamolybdate d'ammonium cristallisé, soit sous la forme d'un mélange de dimolybdate d'ammonium et d'anhydride molybdique. Lorsque la première solution aqueuse contient uniquement de l'heptamolybdate d'ammonium sous une des formes précitées, son pH est de 5,4 environ.

On peut citer plus particulièrement, comme sel d'ammonium de tungstène, le paratungstate d'ammonium.

Lorsque la première solution aqueuse contient uniquement du paratungstate d'ammonium, son pH est de 5,8 environ.

Lorsqu'on a un mélange de paratungstate d'ammonium et d'heptamolybdate d'ammonium, le pH oscille, suivant les proportions relatives des deux constituants, entre environ 5,4 et environ 5,8.

Selon un mode de mise en œuvre particulier de l'invention, on utilise une première solution aqueuse contenant uniquement de l'heptamolybdate d'ammonium et une deuxième solution aqueuse contenant, comme métal A, le cobalt et, comme métaux B, le fer et le bismuth en quantités permettant d'atteindre la formule catalytique où a est compris entre environ 8 et environ 10, c est égal à environ 12 et b est compris entre environ 1 et environ 4.

Le pH obtenu après addition d'ammoniaque à la première solution aqueuse et maintenu lors de l'addition de la deuxième solution aqueuse doit être supérieur à environ 6 pour assurer la précipitation des cobalt, nickel, manganèse et plomb. En effet, à des valeurs de pH inférieures à environ 6, si les métaux du groupe B précipitent, les métaux du groupe A ne précipitent que très imparfaitement ou même pas du tout.

L'ajout d'ammoniaque pour l'obtention d'un pH supérieur à 8 ne se justifie pas techniquement et économiquement dans la mesure où, à un pH > 8, on peut observer certains phénomènes de redissolution.

Encore plus particulièrement, selon l'invention, on utilise les deux mêmes solutions aqueuses de molybdène, d'une part, et de fer, bismuth, cobalt, d'autre part, en quantités permettant d'atteindre la formule catalytique où a est égal à environ 10, c est

égal à environ 12 et b est égal à environ 2.

Selon une variante de l'invention, après la fin de l'addition simultanée de la deuxième solution aqueuse et de l'ammoniaque, on peut porter la suspension obtenue à une température comprise entre environ 20 et environ 100°C et maintenir cette température entre environ 1 et 48 h.

Ce traitement thermique permet de parfaire la précipitation des métaux des groupes A et B et du molybdène et/ou du tungstène. Au cours de cette phase facultative du procédé, on peut assister à une évolution du pH qui peut décroître légèrement.

Il apparaît clairement que, plus la température de ce traitement thermique sera élevée, moins le temps de maintien de la suspension à cette température sera long.

On maintient de préférence la température à 60°C pendant 4 h.

L'ammoniaque ajoutée tant à la première solution aqueuse que simultanément à la deuxième solution aqueuse est, de préférence, une solution aqueuse contenant entre environ 50 et environ 250 g d'ammoniac par litre de solution.

Encore plus préférentiellement, on préfère opérer avec une solution contenant 160 g d'ammoniac/l.

Comme indiqué précédemment, les catalyseurs obtenus selon le procédé de l'invention sont utiles notamment pour l'obtention d'acroléine par oxydation du propylène par l'air.

D'autres avantages et caractéristiques de l'invention apparaîtront plus clairement à la lecture des exemples qui vont suivre et qui ne sauraient être considérés en aucune manière comme une limitation de l'invention.

*Exemple 1:*

*Préparation de $Co_{10,3}Mo_{12}Fe_{1,06}Bi_{1,06}Ox$*

On prépare une première solution aqueuse d'heptamolybdate d'ammonium en dissolvant 167,6 g de $(NH_4)_6Mo_7O_{24}$, $4H_2O$ dans 760 cm³ de $H_2O$ à température ambiante. On ajoute à cette solution 52 ml d'ammoniaque (d = 0,935, 160 g de $NH_3$ par litre) de façon à amener le pH à 6,9.

On ajoute à la solution résultante une deuxième solution aqueuse préparée en mélangeant:

— 38,4 g de $Bi(NO_3)_3$, $5H_2O$ dans 28,5 cm³ de $H_2O$ acidifiée par 4,5 cm³ d'acide nitrique,

— 32,1 g de $Fe(NO_3)_3$, $9H_2O$ dans 25 cm³ de $H_2O$,

— 230,1 g de $Co(NO_3)_2$, $6H_2O$ dans 150 cm³ de $H_2O$ tout en ajoutant simultanément un volume total de 39 ml d'ammoniaque (d = 0,935) de façon à maintenir pendant toute l'addition de la deuxième solution aqueuse le pH à une valeur comprise entre 6,9 et 7 environ.

On porte la solution obtenue à 60°C et on maintient cette température pendant 4 h, puis on laisse refroidir.

On filtre et on lave avec 1 l d'eau.

Le précipité est séché une nuit à 120°C. On obtient 229 g d'un solide qui, après calcination à 400°C pendant 6 h, a un poids de 215 g et dont la composition est $Co_{10,3}Mo_{12}Fe_{1,06}Bi_{1,06}Ox$. Ce solide peut, selon les techniques connues dans l'art antérieur, être broyé, enrobé sur support et calciné.

Le filtrat est analysé: il contient 156,3 g de $NH_4NO_3$, 1,42 g de Co exprimé sous forme métallique, 5,5 g de molybdène, 6 mg de bismuth et 6 mg de Fe également exprimés sous forme métallique.

*Exemple 2:*

*Préparation de $Co_{10,5}Mo_{12}Fe_{1,05}Bi_{1,05}Ox$*

On opère comme dans l'exemple 1, mais en amenant à 7,5 le pH de la solution d'heptamolybdate d'ammonium en utilisant 114 ml d'ammoniaque (d = 0,935).

Simultanément à la deuxième solution aqueuse, on ajoute un volume total de 53 ml d'ammoniaque (d = 0,935) de façon à maintenir le pH à 7,5.

On filtre la solution sans effectuer de traitement thermique.

Le précipité obtenu, séché une nuit à 120°C, pèse 236,5 g. Après calcination à 400°C, son poids est de 211 g et sa composition est $Co_{10,5}Mo_{12}$-$Fe_{1,05}Bi_{1,05}Ox$.

Le filtrat contient 160,6 g de $NH_4NO_3$, 0,34 g de cobalt, 4,8 g de molybdène exprimés sous forme métallique. On ne détecte pas la présence de fer et de bismuth.

*Exemple 3:*

*Préparation de $Co_9Mo_{12}Bi_{1,7}Fe_{1,7}Ox$*

A la même solution aqueuse d'heptamolybdate d'ammonium que dans l'exemple 1, on ajoute 114 ml d'ammoniaque (d = 0,935) pour obtenir un pH de 7,5.

A cette solution, on ajoute une deuxième solution aqueuse préparée en mélangeant:

— 65,8 g de $Bi(NO_3)_3$, $5H_2O$ dans 50 cm³ d'eau et 7 cm³ d'acide nitrique,

— 54,77 g de $Fe(NO_3)_3$, $9H_2O$ dans 90 cm³ d'eau,

tout en ajoutant un volume total de 45 ml d'ammoniaque (d = 0,935) de façon à maintenir le pH à 7,5.

Le précipité obtenu, séché une nuit à 120°C, pèse 245,5 g. Après calcination à 400°C pendant 6 h, le poids du précipité est de 216,3 g. La composition est $Co_9Mo_{12}Bi_{1,7}Fe_{1,7}Ox$.

Le filtrat contient 171,7 g de $NH_4NO_3$, 0,30 g de cobalt et 4,8 g de molybdène exprimés sous forme métallique.

On ne détecte pas la présence de fer ni de bismuth.

*Exemple 4:*

*Préparation de $Co_1Mo_{12}Bi_1Fe_1Ox$*

On opère comme à l'exemple 3, mais en ajustant le pH de la première solution aqueuse d'heptamolybdate d'ammonium à pH 6,4 avec 20 cm³ d'ammoniaque (d = 0,935).

On maintient cette même valeur de pH en ajoutant à la solution résultante la deuxième

solution aqueuse de l'exemple 3 et, simultanément, un volume total de 50 ml d'ammoniaque (d = 0,935).

Le précipité obtenu, séché une nuit à 120°C, pèse 215 g. Après calcination à 400°C, son poids est de 190 g et sa composition est $Co_7Mo_{12}Bi_1$-$Fe_1$Ox.

Le filtrat contient 164 g de $NH_4NO_3$, 8,4 g de cobalt et 2,6 g de molybdène exprimés sous forme métallique. On ne détecte pas la présence de fer ni de bismuth dans le filtrat.

## Revendications

1. Procédé de préparation de catalyseurs comportant une phase active répondant à la formule générale:

$$A_aMo_cW_dB_bO_x$$

dans laquelle:

— A représente au moins un métal choisi parmi le groupe comprenant le cobalt, le nickel, le manganèse, le plomb,

— B représente au moins un métal choisi parmi le groupe comprenant le fer, le bismuth, le chrome, le thallium,

— a, représentant la somme des indices affectés à chacun des métaux A, est supérieur à 0 et inférieur ou égal à environ 12,

— c et d sont chacun supérieurs ou égaux à 0 et inférieurs ou égaux à 12, leur somme (c + d) étant égale à environ 12,

— b, représentant la somme des indices affectés à chacun des métaux B, est supérieur à 0 et inférieur ou égal à environ 1,5[(c + d)−a], et

— x satisfait aux valences,

procédé du type selon lequel: dans une première étape, on mélange en phase aqueuse des sels des métaux entrant dans la composition de la phase active, le molybdène et/ou le tungstène étant sous forme de sels d'ammonium et au moins l'un des métaux A et B étant sous la forme d'un nitrate ou d'un chlorure; dans une deuxième étape, on sèche la pâte obtenue et, dans une troisième étape, on effectue au moins une calcination du solide obtenu éventuellement déposé sur un support, procédé caractérisé en ce que, dans la première étape, successivement, l'on ajoute, à une première solution aqueuse contenant les sels d'ammonium de molybdène et/ou de tungstène en quantités permettant d'atteindre les valeurs c et d, de l'ammoniaque jusqu'à obtention d'un pH compris entre 6 et 8, l'on ajoute à la solution aqueuse contenant les sels de A et de B en quantités permettant d'atteindre les valeurs a et b et, d'autre part, de l'ammoniaque de façon à maintenir le pH à une valeur comprise entre 6 et 8, puis en ce que l'on filtre la solution obtenue pour obtenir ladite pâte.

2. Procédé selon la revendication 1, caractérisé en ce que la première solution aqueuse contient uniquement de l'heptamolybdate d'ammonium.

3. Procédé selon la revendication 1, caractérisé en ce que la première solution aqueuse contient uniquement du paratungstate d'ammonium.

4. Procédé selon la revendication 1, caractérisé en ce que la première solution aqueuse contient un mélange d'heptamolybdate d'ammonium et de paratungstate d'ammonium.

5. Procédé selon les revendications 1 et 2, caractérisé en ce que la première solution aqueuse contient de l'heptamolybdate d'ammonium, la deuxième solution aqueuse contient comme métal A le cobalt et comme métaux B le fer et le bismuth en quantités permettant d'atteindre une valeur de a comprise entre environ 8 et environ 10, une valeur de b comprise entre environ 1 et environ 4 et une valeur de c égale à environ 12.

6. Procédé selon la revendication 5, caractérisé en ce que a est égal à environ 10 et b est égal à 2.

7. Procédé selon la revendication 1, caractérisé en ce que, après la fin de l'addition simultanée de la deuxième solution aqueuse et de l'ammoniaque, on porte la suspension obtenue à une température comprise entre environ 20 et environ 100°C, et on maintient cette température entre environ 1 et environ 48 h.

8. Procédé selon la revendication 7, caractérisé en ce que l'on porte la suspension à 60°C pendant 4 h.

9. Procédé selon l'une des revendications précédentes, caractérisé en ce que l'ammoniaque ajoutée est sous la forme d'une solution aqueuse contenant entre environ 50 et environ 250 g d'ammoniac par litre de solution.

10. Procédé selon la revendication 9, caractérisé en ce que la solution aqueuse contient 160 g d'ammoniac/l.

## Ansprüche

1. Verfahren zur Herstellung von Katalysatoren enthaltend eine aktive Phase der allgemeinen Formel:

$$A_aMo_cW_dB_bO_x$$

in der:

— A wenigstens ein Metall aus der Gruppe von Kobalt, Nickel, Mangan und Blei,

— B wenigstens ein Metall aus der Gruppe von Eisen, Wismut, Chrom und Thallium,

— a die Summe der jedem der Metalle A entsprechenden Indizes bedeutet und grösser als 0 und kleiner oder gleich etwa 12 ist,

— c und d jeweils grösser oder gleich 0 und kleiner oder gleich 12 sind, wobei die Summe von c + d ungefähr gleich 12 ist,

— b die Summe der zu den Metallen B gehörenden Indizes bedeutet und grösser als 0 und kleiner oder gleich etwa 1,5[(c + d)−a] ist, und

— x den Valenzen genügt,

bei dem man in einer ersten Stufe in wässeriger Phase Salze der Metalle gemäss der Zusammensetzung der aktiven Phase vermischt, wobei das Molybdän und/oder das Wolfram in Form der Ammoniumsalze und wenigstens eines der Metalle A und B in Form eines Nitrats oder Chlorids vorliegen, in einer zweiten Stufe die erhaltene

Paste trocknet und in einer dritten Stufe den gegebenenfalls auf einen Träger aufgebrachten Feststoff wenigstens einer Calcinierung unterwirft, dadurch gekennzeichnet, dass man in der ersten Stufe nacheinander zu einer ersten wässerigen Lösung, die die Ammoniumsalze des Molybdäns und/oder Wolframs in einer zur Erreichung der Werte c und d ausreichenden Menge enthält, Ammoniak bis zur Erreichung eines pH-Werts zwischen 6 und 8 gibt, der erhaltenen Lösung gleichzeitig einerseits eine zweite wässerige Lösung zugibt, die die Salze von A und B in den zur Erreichung der Werte a und b erforderlichen Mengen enthält und andererseits Ammoniak, um einen pH-Wert zwischen 6 und 8 aufrechtzuerhalten und die erhaltene Lösung filtriert, um die genannte Paste zu erhalten.

2. Verfahren nach Anspruch 1, dadurch gekennzeichnet, dass die erste wässerige Lösung nur Ammoniumheptamolybdat enthält.

3. Verfahren nach Anspruch 1, dadurch gekennzeichnet, dass die erste wässerige Lösung nur Ammoniumparawolframat enthält.

4. Verfahren nach Anspruch 1, dadurch gekennzeichnet, dass die erste wässerige Lösung ein Gemisch von Ammoniumheptamolybdat und Ammoniumparawolframat enthält.

5. Verfahren nach den Ansprüchen 1 und 2, dadurch gekennzeichnet, dass die erste wässerige Lösung Ammoniumheptamolybdat enthält, die zweite wässerige Lösung als Metall A Kobalt und als Metall B Eisen und Wismut in Mengen enthält, die die Erreichung eines Wertes a zwischen etwa 8 und etwa 10, eines Werts b zwischen etwa 1 und etwa 4 und eines Wertes c von etwa 12 ermöglichen.

6. Verfahren nach Anspruch 5, dadurch gekennzeichnet, dass a ungefähr gleich 10 und b gleich 2 ist.

7. Verfahren nach Anspruch 1, dadurch gekennzeichnet, dass man die nach Beendigung der gleichzeitigen Zugabe der zweiten wässerigen Lösung und des Ammoniaks erhaltene Suspension auf eine Temperatur zwischen etwa 20 und etwa 100°C bringt und diese Temperatur zwischen etwa 1 h und etwa 48 h aufrecht erhält.

8. Verfahren nach Anspruch 7, dadurch gekennzeichnet, dass man die Suspension 4 h auf 60°C erwärmt.

9. Verfahren nach irgendeinem der vorangehenden Ansprüche, dadurch gekennzeichnet, dass das zugegebene Ammoniak in Form einer wässerigen Lösung vorliegt, die zwischen etwa 50 und etwa 250 g Ammoniak/l der Lösung enthält.

10. Verfahren nach Anspruch 9, dadurch gekennzeichnet, dass die wässerige Lösung 160 g Ammoniak/l enthält.

## Claims

1. Process for the preparation of catalysts containing an active phase corresponding to the general formula:

$$A_aMo_cW_dB_bO_x$$

in which:

— A represents at least one metal chosen from the group comprising cobalt, nickel, manganese and lead,

— B represents at least one metal chosen from the group comprising iron, bismuth, chromium and thallium,

— a, which represents the sum of the indices belonging to each of the metals A, is greater than 0 and less than or equal to about 12,

— c and d are each greater than or equal to 0 and less than or equal to 12, their sum c + d being equal to about 12,

— b, which represents the sum of the indices belonging to each of the metals B, is greater than 0 and less than or equal to about 1.5[(c + d)−a], and

— x satisfies the valencies,

the process being of the type in which, in a first step, salts of the metals forming part of the composition of the active phase are mixed in the aqueous phase, the molybdenum and/or the tungsten being in the form of ammonium salts and at least one of the metals A and B being in the form of a nitrate or a chloride, in a second step, the paste obtained is dried, and, in a third step, the solid obtained, if appropriate deposited on a support, is calcined at least once, and the process being characterised in that, in the first step, a first aqueous solution containing the ammonium salts of molybdenum and/or tungsten in amounts making it possible to reach the values c and d is treated with aqueous ammonia until a pH of between 6 and 8 is obtained, and, in succession to this, the resulting solution is treated simultaneously with, on the one hand, a second aqueous solution containing the salts of A and B in amounts making it possible to reach the values a and b, and, on the other hand, aqueous ammonia so as to keep the pH at a value of between 6 and 8, and then in that the solution obtained is filtered to give the said paste.

2. Process according to claim 1, characterised in that the first aqueous solution contains only ammonium heptamolybdate.

3. Process according to claim 1, characterised in that the first aqueous solution contains only ammonium paratungstate.

4. Process according to claim 1, characterised in that the first aqueous solution contains a mixture of ammonium heptamolybdate and ammonium paratungstate.

5. Process according to claims 1 and 2, characterised in that the first aqueous solution contains ammonium heptamolybdate and the second aqueous solution contains cobalt as the metal A and iron and bismuth as the metals B, in amounts making it possible to reach a value of a of between about 8 and about 10, a value of b of between about 1 and about 4 and a value of c equal to about 12.

6. Process according to claim 5, characterised in that, after the simultaneous addition of the second aqueous solution and the aqueous ammonia has ended, the suspension obtained is heated to a temperature of between about 20°C and about 100°C and this temperature is maintained for between about 1 h and about 48 h.

8. Process according to claim 7, characterised in that the suspension is heated at 60°C for 4 h.

9. Process according to any one of the preceding claims, characterised in that the aqueous ammonia added is in the form of an aqueous solution containing between about 50 and about 250 g of ammonia/l of solution.

10. Process according to claim 9, characterised in that the aqueous solution contains 160 g of ammonia/l.